# EUROPÄISCHE PATENTANMELDUNG

(11) **EP 2 530 417 A2**
(43) Veröffentlichungstag der Anmeldung: **05.12.2012**
(21) Anmeldenummer: 12169021.8
(22) Anmeldetag: 23.05.2012
(51) Int. Cl.: F28D 20/00

(54) **Fluidspeicher**

(30) Priorität: 30.05.2011 DE 102011103580
(71) Anmelder: ROBERT BOSCH GMBH, 70442 Stuttgart (DE)
(72) Erfinder: Senn, Matthias, 73249 Wernau (DE)

(57) **Zusammenfassung**

Die Erfindung betrifft einen Fluidspeicher mit einem Speicherbehälter, wobei in diesem durch wenigstens eine Trennwand ein erster Teilbereich und ein horizontal benachbarter zweiter Teilbereich ausgebildet sind, und wobei die Teilbereiche in einem oberen Abschnitt durch die Trennwand hydraulisch getrennt und in einem unteren Abschnitt hydraulisch miteinander verbunden sind.

## Beschreibung

Die Erfindung betrifft einen Fluidspeicher nach dem Oberbegriff des Patentanspruchs 1.

Fluidspeicher, in denen Fluid einen von der Höhe abhängigen Temperaturgradienten aufweist, sind bekannt. Bedingt durch eine temperaturabhängige Dichte schichtet sich warmes Fluid weiter oben ein als kaltes Fluid. Hierdurch bilden sich Fluidschichten unterschiedlicher Temperatur aus. Derartige Fluidspeicher benötigen vergleichsweise große Bauhöhen, sodass eine erhebliche Unterseitenbelastung des Fluidspeichers durch die Flüssigkeitssäule des Fluids vorliegt. Außerdem wird eine relativ kleine Stellfläche, z.B. auf einer Bodenplatte oder einer tragenden Decke, stark belastet und die Bauhöhe des Fluidspeichers ist durch die Deckenhöhe des Aufstellortes beschränkt.

Deshalb sieht DE 20 2009 003 106 U1 einen Mehrkammer-Wärmespeicher vor. Wenigstens zwei Kammern sind nebeneinander und benachbart angeordnet, sodass ein Fluid die Kammern jeweils temperaturgeschichtet ausfüllt. Die erste Kammer hat oberseitig einen Vorlauf und unterseitig einen Rücklauf. Zur hydraulischen Verbindung der beiden Kammern ist dieser Rücklauf mit einem oberseitigen Vorlauf der zweiten Kammer verbunden. Bei einem Abfließen von Fluid durch den oberseitigen Vorlauf der ersten Kammer und einem Auffüllen von Fluid durch einen unterseitigen Rücklauf in die zweite Kammer, wird die auf einem höchsten Temperaturniveau befindliche Schicht des Fluids in der zweiten Kammer zu einem Übertritt in die erste Kammer gezwungen. In der ersten Kammer bildet das übergetretene Fluid eine Schicht auf einem unteren Temperaturniveau aus.

Der Mehrkammer-Wärmespeicher kann somit als Reihenschaltung herkömmlicher Fluidspeicher ausgebildet sein, wobei die Fluidtemperatur von einer letzten hin zur ersten Kammer ansteigt. Dies kann sich über eine Vielzahl von Kammern fortsetzen, sodass vergleichsweise hohe Fluidtemperaturen in der ersten Kammer erreicht werden können, aus der dann das Speichermedium auf einem höchsten Temperaturniveau abgezogen werden kann.

Ein Wärmeeintrag (eine Beladung) in die Kammern erfolgt derart, dass sich eine Heizschlange in Bodennähe durch alle Kammern erstreckt, wobei sich deren Vorlauf auf der Seite der ersten Kammer und deren Rücklauf auf der Seite der letzten Kammer befinden.

Nachteilig an einer solchen Ausbildung ist, dass ein hoher Materialbedarf für die Ausbildung der einzelnen Kammern besteht. Außerdem kann nicht die gesamte in den Speicher eingetragenen Wärme in die erste Kammer geladen werden, was jedoch bei einer Entnahme von Fluid durch den Vorlauf der ersten Kammer wünschenswert wäre, um das Temperaturniveau an der Entnahmestelle aufrecht zu erhalten. Dadurch, dass das Fluid bereits in bodennähe der ersten Kammer ein relativ hohes Temperaturniveau aufweist, ist das Temperaturdelta zwischen dieser Temperatur und der Heizschlange sehr gering. Dies erschwert die Wärmeübertragung von der Heizschlange auf das Fluid in der ersten Kammer.

Letztlich kann ein Kältemittel, das durch die in bodennähe angeordnete Heizschlange fließt, in der ersten Kammer eine geringere Temperatur aufweisen als das umgebende Fluid. Dann entzieht das Kältemittel der ersten Kammer Wärme und leitet diese in davor liegende Kammern. Die Temperatur in der ersten Kammer fällt dann ab statt zu steigen. Sie kann sogar unter eine gewünschte Brauchwassertemperatur fallen. Problematisch ist dies zum Beispiel in Kombination mit einem Solarkollektor als Wärmequelle. Ein solcher Solarkreislauf muss dann deaktiviert werden, obwohl ein durch ihn strömendes Kältemittel/Fluid ein höhere Temperatur hat als das Fluid in wenigstens einer der weiteren Kammern. Somit kann der Solarkreislauf nur bei starker Sonneneinstrahlung aktiviert werden und schöpft seine Leistungsfähigkeit nicht aus.

Aufgabe der Erfindung ist es daher, einen Fluidspeicher zu entwickeln, der diese und weitere Nachteile des Standes der Technik überwindet und insbesondere eine geringe Bauhöhe aufweist, sowie eine möglichst einfache Wärmezuführung ermöglicht, eine Anordnung einer Wärmezuführeinrichtung in einem Bereich mit einem möglichst großen Temperaturdelta zum zu erwärmenden Fluid erlaubt, einen geringen Materialaufwand erfordert, einfach montierbar ist und wenig kostet.

Erfindungsgemäß wird dies mit den Merkmalen des Patentanspruchs 1 gelöst. Vorteilhafte Weiterbildungen sind den Unteransprüchen zu entnehmen.

Bei einem Fluidspeicher mit einem Speicherbehälter sieht die Erfindung vor, dass in diesem durch wenigstens eine Trennwand ein erster Teilbereich und ein horizontal benachbarter zweiter Teilbereich ausgebildet sind, wobei die Teilbereiche in einem oberen Abschnitt durch die Trennwand hydraulisch getrennt und in einem unteren Abschnitt hydraulisch miteinander verbunden sind.

In einem hohlförmigen Speicherbehälter mit einer Oberseite, einer Unterseite und einer Seitenwand, könnten die Trennwände beispielsweise in diesem Hohlraum mit der Oberseite und der Seitenwand verbunden werden und nach unten in den Hohlraum ragen. Die Unterkanten der Trennwände müssen hierbei nicht zwingend horizontal und gerade sein. So ist zum Beispiel auch möglich, die Trennwände mit der Unterseite des Speicherbehälters zu verbinden und Ausnehmungen in der Trennwand vorzusehen, mit denen die hydraulische Verbindung der Teilbereiche hergestellt wird. Dies kann die Stabilität der Trennwände erhöhen, da letztere folglich nicht frei in den Raum hineinragen, bzw. nicht freistehend sind.

Ein solcher Fluidspeicher erlaubt bei entsprechender Beladung ein horizontales Temperaturgefälle zwischen den oberen Abschnitten. Sofern in den ersten Teilbereich Wärme zugeführt wird, schichtet sich zunächst in diesem Teilbereich das Fluid mit der höchsten Temperatur soweit oben wie möglich ein. Somit ist zunächst Fluid in diesem obere Abschnitt erwärmt und Fluid in den unteren Abschnitten sowie in den weiteren oberen Abschnitten nicht. Eine heißere Schicht in diesem oberen Abschnitt des ersten Teilbereichs verdrängt unter ihr angeordnetes Fluid. Sobald erwärmtes Fluid aufgrund dieser Verdrängung und weiterer Wärmezuführung bis in den unteren Abschnitt des ersten Teilbereichs gelangt, hat dieses das Bestreben in den benachbarten zweiten Teilbereich und dort nach oben zu strömen. Die Temperatur des im zweiten Teilbereich im oberen Abschnitt befindlichen Fluids hat dann eine Temperatur, die in etwa der Temperatur entspricht, die im ersten Teilbereich an der Grenze zwischen oberem und unterem Abschnitt vorliegt. Somit weichen die Temperaturen in den oberen Abschnitten des ersten und zweiten Teilbereichs voneinander ab. Insbesondere ist die Temperatur von Fluid im ersten Teilbereich höher als die im zweiten Teilbereich. Dahingegen entsprechen die Fluidtemperaturen der unteren Abschnitte einander.

Durch dieses horizontale Temperaturgefälle in den oberen Abschnitten wird die aus dem Stand der Technik bekannte vertikale Einschichtung des Fluids in hohen Fluidspeichern gewissermaßen in die Horizontale gekippt. Mithin sind erfindungsgemäße Fluidspeicher mit deutlich geringerer Bauhöhe als die des Standes der Technik realisierbar, ohne auf eine effektive Einschichtung verzichten zu müssen. Dabei können dennoch gleichermaßen große Speichervolumina bereitgestellt werden. Insbesondere ist es so möglich, dass die Breite bzw. der Durchmesser des Fluidspeichers größer ist als dessen Höhe, ohne dass sich dies negativ auf die Einschichtung des Fluids auswirkt.

Im Vergleich zum Stand der Technik mit mehreren nebeneinander angeordneten Kammern ist der Materialeinsatz für den Fluidspeicher geringer, da im Stand der Technik entweder komplett einzelne Kammern vorgesehen sind, oder aber sich die Trennwände über die gesamte Bauhöhe des Fluidspeichers erstrecken. Zusätzlich sind keine Verbindungsleitungen innerhalb des erfindungsgemäßen Speicherbehälters notwendig, um die verschiedenen Teilbereiche miteinander zu verbinden. Insgesamt sind deshalb die Kosten des Fluidspeichers gering und die Montage durch die geringe Komplexität einfach.

Für die Beladung und Entladung können vor allem indirekte Vorrichtungen wie Wärmetauscher und direkte Vorrichtungen wie Vor- und Rückläufe eingesetzt werden. Vorteilhaft ist, dass bei einer indirekten Beladung ein Wärmetauscher unmittelbar am tiefstliegenden Ort des Fluidspeichers anordenbar ist, wo das tiefste Temperaturniveau vorliegt. Somit ist das Temperaturgefälle zwischen dem Wärmetauscher und dem zu erwärmenden Fluid sehr groß und die Wärme einer Wärmequelle kann hervorragend genutzt werden. Beispielsweise lassen sich so die möglichen Betriebsstunden eines Solarkollektors deutlich erhöhen, da diesem ein im Wärmetauscher stark abgekühltes Kältemittel zugeführt werden kann, und dieses selbst bei mäßiger Sonneneinstrahlung und kühlen Außentemperaturen noch erwärmbar ist.

Eine Ausbildung des Fluidspeichers sieht vor, dass der erste Teilbereich in der Horizontalen zwischen zwei Trennwänden und wenigstens einer Seitenwand des Speicherbehälters angeordnet ist.

Durch zwei Trennwände ist es möglich, den ersten Teilbereich in einer horizontalen Richtung zwischen dem zweiten Teilbereich anzuordnen. Wärmeverluste über die Trennwände sind somit nicht verloren, sondern führen zu einer Erwärmung des Fluids im zweiten Teilbereich. Lediglich an der Oberseite des Speicherbehälters grenzt der obere Abschnitt des ersten Teilbereichs an eine Außenwand des Speicherbehälters. Der zweite Teilbereich hingegen grenzt an alle verbliebenen Außenwände des Speicherbehälters im oberen Abschnitt. Deshalb sollte die Beladung des Speicherbehälters derart erfolgen, dass Fluid im zweiten Teilbereich ein niedrigeres Temperaturniveau aufweist als das im ersten Teilbereich. Letzterer hat so nur ein geringes Temperaturdelta zur Umgebung des Fluidspeichers. Wärmeverluste werden so minimiert.

Um die Wärmeverluste noch weiter zu minimieren, sieht eine andere Ausgestaltung des Fluidspeichers vor, dass die Trennwand einen geschlossenen Umfang hat und der erste Teilbereich horizontal innerhalb des zweiten Teilbereichs angeordnet ist. Zum Beispiel könnte die Trennwand eine Rohrform mit rechteckigem, elliptischem oder konischem Querschnitt haben. Durch den geschlossenen Umfang kann eine hohe Steifigkeit der Trennwand erzielt werden, sodass diese mit weniger Material ausgelegt werden kann. Durch die Ausbildung der Trennwand mit geschlossenem Umfang besteht lediglich eine kleine Oberfläche mit hohem Temperaturdelta zur Umgebung des Fluidspeichers. Insbesondere ist diese Fläche an der oberen Außenwand des Speicherbehälters im Bereich des ersten Teilbereichs angeordnet. Horizontale Wärmeverluste und vertikal nach unten gerichtete Wärmeverluste des wärmsten Fluids im Fluidspeicher verlassen den Speicherbehälter hingegen nicht, sondern werden von umgebendem kühlerem Fluid aufgenommen.

Eine wichtige Weiterentwicklung der Erfindung sieht vor, dass im zweiten Teilbereich durch wenigstens eine weitere Trennwand horizontal benachbarte Unterteilbereiche ausgebildet sind, wobei zwei aneinandergrenzende Unterteilbereiche jeweils in einem weiteren oberen Abschnitt durch eine der weiteren Trennwände hydraulisch getrennt und in einem weiteren unteren Abschnitt hydraulisch miteinander verbunden sind. Der zweite Teilbereich ist somit weiter unterteilt. Die verschiedenen Bereiche, also der erste Teilbereich und die Unterteilbereiche, könnten dabei horizontal nebeneinander angeordnet oder aber ineinander geschachtelt sein. Weiterhin sind auch Kombinationen hieraus möglich.

Durch die Unterteilbereiche kann die horizontale Einschichtung von Fluid weiter gesplittet werden. Je tiefer liegend die hydraulische Verbindung durch eine Trennwand ausgebildet ist, desto später wird der angrenzende obere Abschnitt bei einer Wärmezufuhr in den ersten Teilbereich erwärmt, und desto geringer ist die Temperatur des Fluids im oberen Abschnitt. Hierdurch lassen sich sehr breite Fluidspeicher realisieren, die zudem äußerst geringe Wärmeverluste aufweisen. Je mehr Unterteilbereiche vorgesehen sind, desto geringer sind die Temperaturdelta zwischen zwei benachbarten oberen Abschnitten. Hierdurch werden Wärmeverluste verringert.

Bevorzugt ist das Volumen des ersten Teilbereichs kleiner ist als die Volumina des zweiten Teilbereichs oder der jeweiligen Unterteilbereiche, sowie das Volumen eines früher zu ladenden Unterteilbereichs vorzugsweise kleiner als das Volumen eines Unterteilbereichs, der aufgrund der hydraulischen Verbindung spät geladen wird. Hierdurch wird eine geringe Menge an heißem Fluid, zum Beispiel für die Brauchwasserentnahme, und eine größere Menge an weniger erwärmtem Fluid vorgehalten. Letzteres wird lediglich durchgeladen, d.h. stark erwärmt, wenn viel Ladeenergie vorhanden ist.

Besonderes vorteilhaft ist eine Ausgestaltung bei der die Trennwände derart ausgebildet sind, dass die unteren Abschnitte ausgehend vom ersten unteren Abschnitt stufenartig abfallend angeordnet sind. Bei einem Übertritt von warmem Fluid von einem Bereich in einen horizontal benachbarten, kann so verhindert werden, dass sich hierbei entstehende Konvektionswalzen so ausbreiten, dass sie einen Unterabschnitt überspringen. Diese Konvektionswalzen entstehen dadurch, dass sich das warme Fluid beim Übertritt in einen Nachbarbereich zunächst in horizontaler Richtung ausbreiten. Erst durch das Temperaturdelta in dem benachbarten Bereich wird das warme Fluid aufgrund des Dichteunterschieds nach oben beschleunigt. Bei stufenartig abfallenden unteren Abschnitten, wird die horizontale Ausbreitung spätestens an der nächsten Trennwand gestoppt. Anschließend schichtet sich das warme Fluid entsprechend seiner Dichte ein.

Um Wärmeverluste zu reduzieren und ein dauerhaftes hohes Temperaturdelta zwischen zwei benachbarten Teil- oder Unterteilbereichen zu erreichen, sollte wenigstens eine der Trennwände ein schlecht wärmeleitendes Material aufweisen, sodass zwei benachbarte obere Abschnitte thermisch voneinander isoliert sind. Hierfür könnte die Trennwand als solches aus einem schlecht wärmeleitenden Material hergestellt sein, oder aber sie setzt sich zum Beispiel zusammen aus einem Trägerelement und einem schlecht wärmeleitenden Material. Dazu zählen auch hohle mit Luft, Gas oder anderen schlecht wärmeleitenden Materialien gefüllte Trennwände. Durch die thermische Isolierung zwischen zwei oberen Abschnitten gibt Fluid im wärmeren oberen Abschnitt keine/wenig Wärme durch die Trennwand an kälteres Fluid im benachbarten oberen Abschnitt ab. Die Temperatur des Fluids ist somit sehr stabil. Fluid im kälteren oberen Abschnitt hingegen hat nur ein sehr geringes Temperaturdelta zum nächsten oberen Abschnitt oder der Umgebung des Fluidspeichers und Wärmeverluste zu diesen sind ebenfalls geringer.

Weiterhin kann vorgesehen sein, dass in dem Speicherbehälter wenigstens eine horizontale Strömungsbarriere angeordnet ist. Durch die horizontale Ausrichtung der Strömungsbarriere werden in deren Ausdehnungsbereich vertikale Strömungen blockiert. Hierdurch können Durchmischungen von warmem und kaltem Fluid bei einer Beladung oder Entladung des Fluidspeichers durch sich ausbildende Konvektionswalzen (Konvektionsströmungen) reduziert werden. Folglich schichtet sich warmes Fluid schneller und mit weniger Wärmeverlusten in einer seiner Dichte entsprechenden Höhe ein. Hierdurch kann ein schärferes vertikales Temperaturdelta zwischen den Fluidschichten in einem Bereich erzielt werden. In der Folge ist auch das in die horizontale gekippte Temperaturdelta zwischen den Bereichen schärfer. Wärmeverluste werden so weiter reduziert.

Vorzugsweise werden diese Strömungsbarrieren an wenigstens einer Trennwand oder einer der Außenwände des Speicherbehälters angeordnet und/oder befestigt. Besonders geeignet für die Positionierung der Strömungswände sind die Grenzen zwischen den jeweiligen oberen und unteren Abschnitten eines Unterteilbereichs. An dieser Position angeordnet verhindern sie zum einen Fluiddurchwirbelungen durch Konvektionswalzen, die den Unterteilbereich überspringen. Gleichzeitig verhindern sie auch bei Konvektionswalzen, die in den oberen Abschnitt des Unterteilbereichs strömen, Durchmischungen mit kälteren und unterhalb der Strömungsbarriere angeordneten Fluidschichten.

Auch die Strömungsbarrieren könnten ein schlecht wärmeleitendes Material aufweisen, sodass ein Wärmetransfer durch die Strömungsbarriere hindurch reduziert ist. Insbesondere kann so ein vertikaler Wärmefluss von den oberen warmen in die unteren kalten Schichten verringert werden.

Die Be- und Entladung eines solchen Fluidspeichers lässt sich auf vielfache Weise ausführen. Besonders zu bevorzugen ist für die Beladung eine Ausführung, bei der in dem ersten Teilbereich eine Wärmezuführeinrichtung angeordnet ist. Diese kann durch ein direktes Hinzuführen von warmem Fluid oder aber indirekt über einen Wärmetauscher erfolgen.

Bei dem direkten Hinzuführen von warmem Fluid schichtet sich dies zunächst entsprechend seiner Dichte innerhalb des oberen Abschnitts des ersten Teilbereichs ein. Ist die Temperatur geringer als die der tiefsten Fluidschicht im oberen Abschnitt, schichtet sich das Fluid im benachbarten oberen Abschnitt ein, da es sich an einer (Grenz-) Fluidschicht mit geringerer Dichte in die Horizontale ausbreitet.

Um die Durchmischung des warmen zugeführten Fluids mit kälterem Fluid bei der vertikalen Konvektion zu verringern, kann die Wärmezuführeinrichtung eine Schichtladeeinrichtung aufweisen. Eine solche führt das erwärmte Fluid in der korrekten Höhe in den Speicherbehälter. Somit muss das warme Fluid nicht unmittelbar durch die kalten Fluidschichten hindurchströmen.

Eine solche Schichtladeeinrichtung kann als vertikaler rohrförmiger Körper mit über die Bauhöhe verteilten Austrittsöffnungen ausgebildet sein. Hierdurch tritt erwärmtes Fluid erst dort aus der Schichtladeeinrichtung aus, wo die Dichte der darüber liegenden Fluidschicht temperaturbedingt geringer ist als das aufströmende erwärmte Fluid. Somit schichtet sich das erwärmte Fluid in der best möglichen Höhe ein, ohne dass es andere Schichten im freien Raum durchströmen muss und unnötige Verwirbelungen erzeugt. Besonders zu bevorzugen sind Ausführungsformen der Schichtladeeinrichtung, bei denen die Oberkante der Auslassöffnungen mit Abstand von der Achse des rohrförmigen Körpers abfällt, sodass das erwärmte Fluid keine vertikale Strömungsgeschwindigkeit mehr aufweist, wenn es in den Fluidspeicher gelangt.

Bei einer indirekten Beladung mittels eines Wärmetauschers sitzt dieser nach Möglichkeit so tief wie möglich im ersten Teilbereich. Somit ist das Temperaturgefälle zwischen dem Wärmetauscher und dem Fluid maximal, sodass ein im Wärmetauscher befindliches Kältemittel maximal abkühlt und wiederum an einer Wärmequelle eine maximale Energiemenge aufnehmen kann. Sofern die oberen Fluidschichten eine Mindesttemperatur erreichen sollen, z.B. für eine Brauchwasserentnahme, könnten zusätzliche Wärmetauscher oder Wärmetauscherabschnitte vorgesehen sein, die wenn der tiefstgelegene Wärmetauscher nicht das entsprechende Temperaturniveau erreicht, hinzugeschaltet werden können.

Auch eine Beladung mit einem Wärmetauscher am tiefstmöglichen Ort des ersten Teilbereichs kann mit einer Schichtladeeinrichtung ausgestattet sein. Dafür sollte die Schichtladeeinrichtung ähnlich einem Trichter mit der breiten Öffnung knapp oberhalb des Wärmetauschers angeordnet sein. Von der Seite wird der Wärmetauscher nunmehr von einem möglichst kalten Fluid umströmt und steigt nach der Erwärmung in den Trichter auf. Erst in einer Höhe entsprechend der Fluiddichte strömt das erwärmte Fluid wiederum aus der Schichtladeeinrichtung heraus.

Um den Fluidspeicher zu entladen, kann in wenigstens einem oberen Abschnitt ein Vorlaufanschluss zur Entnahme von warmem Fluid angeordnet sein. Durch diesen Vorlauf lässt sich warmes Fluid direkt aus dem oberen Abschnitt entnehmen. Die tiefer liegenden Fluidschichten strömen dann nach oben. Idealerweise sitzt der Vorlauf an der höchsten Stelle des entsprechenden Bereichs. Es kann dabei vorgesehen sein, dass mehrere oder alle Bereiche im oberen Abschnitt einen Vorlauf aufweisen. Je nach Anforderung an die Temperatur des Fluids kann dann einer der Bereiche ausgewählt und Fluid aus diesem entnommen werden.

Zur Entladung kann jedoch auch vorgesehen sein, dass in wenigstens einem oberen Abschnitt ein Wärmetauscher angeordnet ist. Somit kann der obere Abschnitt eines Teil- oder Unterteilbereichs indirekt über den Wärmetauscher abgekühlt und diese Wärme einem Verbraucher zugeführt werden. Ein Wärmetauscher kann sich dabei auch über mehrere Bereiche erstrecken. Der Verbraucher kann beispielsweise ein Heizkreislauf sein. Vorzugsweise sind der kältere Rücklauf des Wärmetauschers im kältesten und der wärmere Vorlauf im wärmsten Bereich angeordnet. Insbesondere geht es hierbei um die Hauptströmungsrichtung des Kältemittels im Wärmetauscher, jedoch nicht um die tatsächlichen Anschlüsse. Somit wird ein ungewollter Temperaturfluss von einem wärmeren Bereich in einen kälteren verhindert.

Die Zeichnungen stellen Ausführungsbeispiele der Erfindung dar und zeigen in
- Fig.1: einen vertikalen Querschnitt durch einen Fluidspeicher mit einer direkten Wärmezuführeinrichtung und einer direkten und indirekten Entladevorrichtung;
- Fig. 2: einen vertikalen Querschnitt durch einen Fluidspeicher mit einer indirekten Wärmezuführeinrichtung und einer direkten Entladevorrichtung;
- Fig. 3: einen vertikalen Querschnitt durch einen Fluidspeicher mit horizontal symmetrisch angeordneten Teil- und Unterteilbereichen;
- Fig.4: einen horizontalen Querschnitt durch einen Fluidspeicher mit horizontal nebeneinander angeordneten Teil- und Unterteilbereichen;
- Fig. 5: einen horizontalen Querschnitt durch einen Fluidspeicher mit horizontal ineinander angeordneten Teil- und Unterteilbereichen mit geschlossenem rechteckigen Umfang; und
- Fig. 6: einen horizontalen Querschnitt durch einen Fluidspeicher mit horizontal nebeneinander und ineinander angeordneten Teil- und Unterteilbereichen.

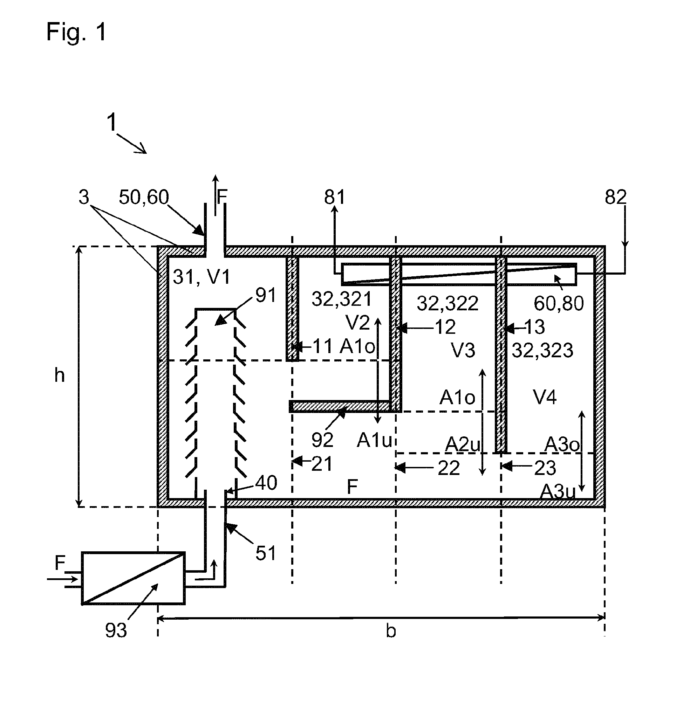

Fig. 1 zeigt einen vertikalen Querschnitt durch einen erfindungsgemäßen Fluidspeicher 1 mit einer direkten Wärmezuführeinrichtung 40 und einer direkten und indirekten Entladevorrichtung 60. Der Fluidspeicher 1 weist einen Speicherbehälter 3 auf. In letzterem sind durch eine Trennwand 11 ein erster Teilbereich 31 und ein horizontal benachbarter zweiter Teilbereich 32 ausgebildet. Die Teilbereiche 31, 32 sind in einem oberen Abschnitt A1ο durch die Trennwand 11 hydraulisch getrennt und in einem unteren Abschnitt A1u hydraulisch miteinander verbunden.

Im zweiten Teilbereich 32 sind durch weitere Trennwände 12, 13 horizontal benachbarte Unterteilbereiche 321, 322, 323 ausgebildet. Zwei aneinandergrenzende Unterteilbereiche 321, 322, 323 sind jeweils in einem weiteren oberen Abschnitt A2o, A3o durch eine der weiteren Trennwände 12, 13 hydraulisch getrennt und in einem weiteren unteren Abschnitt A2u, A3u hydraulisch miteinander verbunden. Insbesondere sind der erste Teilbereich 31 über eine erste hydraulische Verbindung 21 mit dem ersten Unterteilbereich 321, letzterer über eine zweite hydraulische Verbindung 22 mit dem zweiten Unterteilbereich 322, und letzterer über eine dritte hydraulische Verbindung 23 mit dem dritten Unterteilbereich 323 verbunden.

Hierdurch kann Fluid F in dem Fluidspeicher 1 horizontal thermisch eingeschichtet werden. Folglich kann der Fluidspeicher 1 eine geringe Höhe h aufweisen, wobei dessen Breite b größer ist als dessen Höhe h. Trotzdem können die Vorteile einer thermischen Fluideinschichtung voll genutzt werden, da die Einschichtung des Fluids F in die horizontale Richtung gekippt ist. Idealerweise ist das Volumen V1 des oberen Abschnitts A1o des ersten Teilbereichs 31 kleiner als das Volumen V2 des oberen Abschnitts A1o des ersten Unterteilbereichs 321, letzteres kleiner als das Volumen V3 des oberen Abschnitts A2o des zweiten Unterteilbereichs 322 und letzteres kleiner als das Volumen V4 des oberen Abschnitts A3o des dritten Unterteilbereichs 323.

Des Weiteren sind die Trennwände 11, 12, 13 derart ausgebildet, dass die unteren Abschnitte A1 u, A2u, A3u ausgehend vom ersten unteren Abschnitt A1u stufenartig abfallend angeordnet sind. Außerdem weisen sie ein schlecht wärmeleitendes Material auf, sodass zwei benachbarte obere Abschnitte A1o, A2o, A3o der Bereiche 31, 321, 322, 323 thermisch voneinander isoliert sind.

Gemäß der Darstellung ist als Wärmezuführeinrichtung 40 eine direkte Beladung durch ein Zuführen von erwärmtem Fluid F vorgesehen. Hierfür ist im unteren Abschnitt A1u des ersten Teilbereichs ein Rücklauf 51 vorgesehen, der mit einem Wärmetauscher 93 strömungsverbunden ist. Dieser könnte zum Beispiel ein Solarkollektor sein. Durch diesen Wärmetauscher 93 strömendes Fluid F wird erwärmt und strömt in dem Speicherbehälter 3 in eine Schichtladeeinrichtung 91. Letztere ist als vertikaler rohrförmiger Körper ausgebildet, der über die Höhe verteilte horizontale Austrittsöffnungen aufweist. Die Oberkanten der Auslassöffnungen fallen mit Abstand von der Achse des rohrförmigen Körpers ab, sodass das erwärmte Fluid F keine vertikale Strömungsgeschwindigkeit mehr aufweist, wenn es die Schichtladeeinrichtung 91 verlässt. Entsprechend seiner Dichte verlässt das erwärmte Fluid F die Schichtladeeinrichtung 91 in der korrekten Höhe und es entstehen nur geringe Durchmischungen unterschiedlich warmer Fluide F.

Um die Durchmischung von Fluiden F unterschiedlicher Temperatur durch Konvektionswalzen bei der Entladung und/oder Beladung zu verringern, ist in dem Speicherbehälter 3 eine horizontale Strömungsbarriere 92 angeordnet. Insbesondere erstreckt sie sich horizontal im Bereich des ersten Unterteilbereichs 321 auf der Höhe der Grenze zwischen dem zweiten oberen Abschnitt A2o und dem zweiten unteren Abschnitt A2u.

Die Entladevorrichtung 60 weist einen Vorlauf 50 im oberen Abschnitt A1o des ersten Teilbereichs 31 auf. Insbesondere sitzt dieser an der Oberseite des Speicherbehälters 3. Hierdurch kann das wärmste im Speicherbehälter 3 befindliche Fluid F direkt entnommen werden, zum Beispiel als Brauchwasser. Weiterhin weist die Entladevorrichtung 60 einen Wärmetauscher 80 auf, der sich im oberen Abschnitt A1o des zweiten Teilbereichs 32 über alle Unterteilbereiche 321, 322, 323 erstreckt. Dabei sind der Rücklauf 82 im dritten Unterteilbereich 323 und der Vorlauf 81 im ersten Unterteilbereich 321 angeordnet. Dem Wärmetauscher 80 über den Rücklauf 82 zugeführtes kaltes Kältemittel fließt so auf dem Weg zum Rücklauf 81 von dem kältesten Unterteilbereich 323 zum wärmsten Unterteilbereich 321. Dabei wird es erwärmt und entläd den zweiten Teilbereich 32.

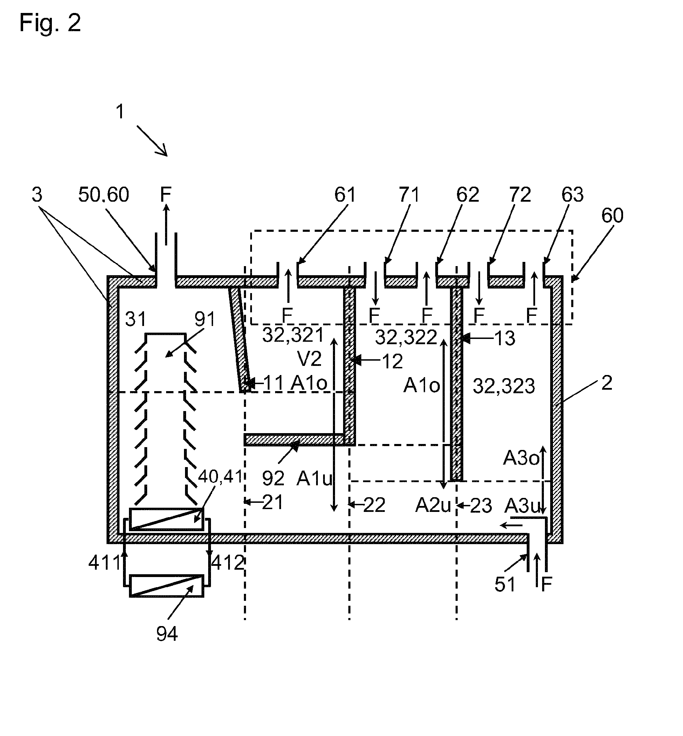

Fig. 2 zeigt einen vertikalen Querschnitt durch einen erfindungsgemäßen Fluidspeicher 1 mit einer indirekten Wärmezuführeinrichtung 40 und einer direkten Entladevorrichtung 60. Der Fluidspeicher 1 weist einen Speicherbehälter 3 mit einer Seitenwand 2 auf. In dem Speicherbehälter 3 sind durch eine Trennwand 11 ein erster Teilbereich 31 und ein horizontal benachbarter zweiter Teilbereich 32 ausgebildet. Die Teilbereiche 31, 32 sind in einem oberen Abschnitt A1o durch die Trennwand 11 hydraulisch getrennt und in einem unteren Abschnitt A1u hydraulisch miteinander verbunden. Die Trennwand 11 ist dabei nicht vertikal sondern schräg ausgerichtet, wodurch die horizontale Querschnittsfläche des oberen Abschnitts A1o im ersten Teilbereich 31 von oben nach unten zunimmt. Hierdurch kann eine sehr kleine Menge sehr heißes Fluid F ganz oben eingeschichtet werden und die Fluidschichten weisen mit sinkender Temperatur größere Volumina auf.

Im zweiten Teilbereich 32 sind durch weitere Trennwände 12, 13 horizontal benachbarte Unterteilbereiche 321, 322, 323 ausgebildet. Zwei aneinandergrenzende Unterteilbereiche 321, 322, 323 sind jeweils in einem weiteren oberen Abschnitt A2o, A3o durch eine der weiteren Trennwände 12, 13 hydraulisch getrennt und in einem weiteren unteren Abschnitt A2u, A3u hydraulisch miteinander verbunden. Insbesondere sind der erste Teilbereich 31 über eine erste hydraulische Verbindung 21 mit dem ersten Unterteilbereich 321, letzterer über eine zweite hydraulische Verbindung 22 mit dem zweiten Unterteilbereich 322, und letzterer über eine dritte hydraulische Verbindung 23 mit dem dritten Unterteilbereich 323 verbunden. Hierdurch kann Fluid F in dem Fluidspeicher 1 horizontal thermisch eingeschichtet werden.

Des Weiteren sind die Trennwände 11, 12, 13 derart ausgebildet, dass die unteren Abschnitte A1u, A2u, A3u ausgehend vom ersten unteren Abschnitt A1u stufenartig abfallend angeordnet sind. Außerdem weisen sie ein schlecht wärmeleitendes Material auf, sodass zwei benachbarte obere Abschnitte A1o, A2o, A3o der Bereiche 31, 321, 322, 323 thermisch voneinander isoliert sind.

Gemäß der Darstellung ist als Wärmezuführeinrichtung 40 eine indirekte Beladung durch einen Wärmetauscher 41 vorgesehen, der über einen Vorlauf 411 und einen Rücklauf 412 mit einem Solarkollektor 94 verbunden ist. Der Wärmetauscher 41 liegt sehr tief unten im Speicherbehälter 3, sodass er von sehr kühlem Fluid F umgeben ist. Auf dieses überträgt der Wärmetauscher 41 Wärme. Dies verringert die Dichte des Fluids F, wodurch es eine Beschleunigung nach oben erfährt, um sich über kälteren und somit schwereren Fluidschichten einzuschichten.

Damit es hierbei nicht zu Durchwirbelungen von warmem und kaltem Fluid F kommt, ist oberhalb des Wärmetauschers 41 in dem Speicherbehälter 3 eine Schichtladeeinrichtung 91 angeordnet. Diese weist unten eine trichterförmig erweiterte Öffnung auf, wodurch aufstrebendes Fluid nicht an der Öffnung vorbeiströmt. Die Schichtladeeinrichtung 91 ist weiterhin als vertikaler rohrförmiger Körper ausgebildet, der über die Höhe verteilte horizontale Austrittsöffnungen aufweist. Die Oberkanten der Auslassöffnungen fallen mit Abstand von der Achse des rohrförmigen Körpers ab, sodass das erwärmte Fluid F keine vertikale Strömungsgeschwindigkeit mehr aufweist, wenn es die Schichtladeeinrichtung 91 verlässt. Entsprechend seiner Dichte verlässt das erwärmte Fluid F die Schichtladeeinrichtung 91 in der korrekten Höhe und es entstehen nur geringe Durchmischungen unterschiedlich warmer Fluide F.

Um die Durchmischung von Fluiden F unterschiedlicher Temperatur durch Konvektionswalzen bei der Entladung und/oder Beladung zu verringern, ist in dem Speicherbehälter 3 eine horizontale Strömungsbarriere 92 angeordnet. Insbesondere erstreckt sie sich horizontal im Bereich des ersten Unterteilbereichs 321 auf der Höhe der Grenze zwischen dem zweiten oberen Abschnitt A2o und dem zweiten unteren Abschnitt A2u.

Die Entladevorrichtung 60 weist im ersten Teilbereich 31 und jedem Unterteilbereich 321, 322, 323 einen Vorlaufanschluss 50, 61, 62, 63 an der Oberseite des Speicherbehälters 3 auf. Hierdurch kann jeweils das wärmste Fluid F eines jeden Bereichs 31, 321, 322, 323 direkt und separat entnommen werden. Wärmeverbraucher mit unterschiedlichen Wärmebedarfen können so jeweils auf einen Bereich 31, 321, 322, 323 mit einer gewünschten Fluidtemperatur zugreifen.

Um den Abfluss von Fluid F aus dem Speicherbehälter 3 auszugleichen, wird diesem im dritten Unterteilbereich 323 über einen Rücklauf 51 in bodennähe Fluid F zugeführt. Idealerweise ist dieser Rücklauf 51 für kühles Fluid F. Warmes Fluid F, zum Beispiel von einem Heizungsrücklauf, sollte nach Möglichkeit auch über eine im ersten Teilbereich 31 angeordnete zusätzliche Schichtladeeinrichtung eingeschichtet werden, oder aber es werden wie gezeigt verschiedene Rücklaufanschlüsse 71, 72 in den Bereichen 31, 321, 322, 323 vorgesehen.

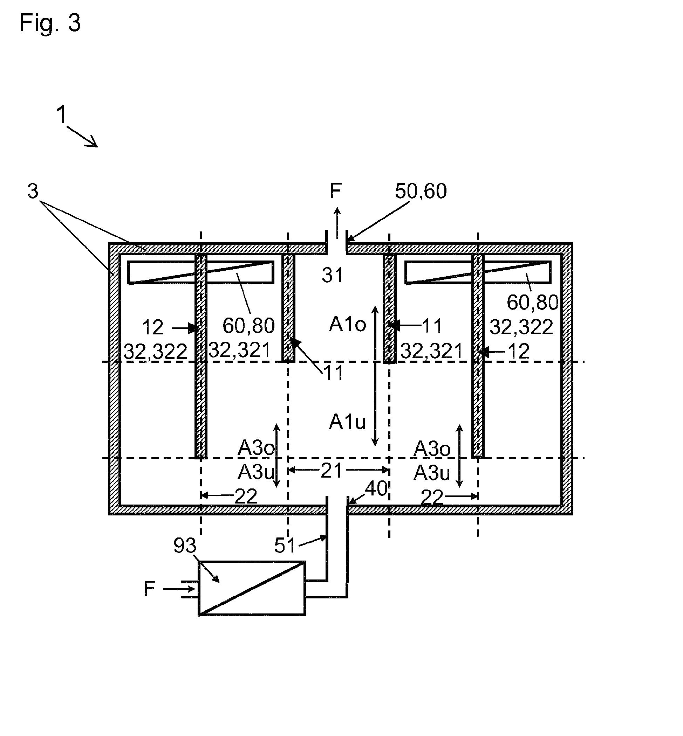

Fig. 3 offenbart einen vertikalen Querschnitt durch einen weiteren erfindungsgemäßen Fluidspeicher 1 mit horizontal symmetrisch angeordneten Teil- 31 und Unterteilbereichen 321, 322. Der Fluidspeicher 1 weist einen Speicherbehälter 3 auf. In letzterem sind durch eine Trennwand 11 ein erster Teilbereich 31 und ein horizontal benachbarter zweiter Teilbereich 32 ausgebildet. Die Teilbereiche 31, 32 sind in einem oberen Abschnitt A1o durch die Trennwand 11 hydraulisch getrennt und in einem unteren Abschnitt A1u hydraulisch miteinander verbunden.

Im zweiten Teilbereich 32 sind durch weitere Trennwände 12 horizontal benachbarte Unterteilbereiche 321, 322 ausgebildet. Zwei aneinandergrenzende Unterteilbereiche 321, 322 sind jeweils in einem weiteren oberen Abschnitt A2o durch die weitere Trennwand 12 hydraulisch getrennt und in einem weiteren unteren Abschnitt A2u hydraulisch miteinander verbunden. Insbesondere sind der erste Teilbereich 31 über eine erste hydraulische Verbindung 21 mit dem ersten Unterteilbereich 321 und letzterer über eine zweite hydraulische Verbindung 22 mit dem zweiten Unterteilbereich 322 verbunden. Hierdurch kann Fluid F in dem Fluidspeicher 1 horizontal thermisch eingeschichtet werden.

Des Weiteren sind die Trennwände 11, 12 derart ausgebildet, dass die unteren Abschnitte A1 u, A2u ausgehend vom ersten unteren Abschnitt A1u stufenartig abfallend angeordnet sind. Außerdem weisen sie ein schlecht wärmeleitendes Material auf, sodass zwei benachbarte obere Abschnitte A1o, A2o der Bereiche 31, 321, 322 thermisch voneinander isoliert sind.

Der gezeigte vertikale Querschnitt des Speicherbehälters 3 und der Trennwände 11, 12 kann sowohl an einer mittig durch den ersten Teilbereich 31 verlaufenden Vertikalen spiegelsymmetrisch sein, als auch um diese vertikale Achse rotationssymmetrisch.

Dabei verfügt der Fluidspeicher 1 über eine direkte Wärmezuführeinrichtung 40 sowie eine direkte und indirekte Entladevorrichtung 60.

Gemäß der Darstellung ist als Wärmezuführeinrichtung 40 eine direkte Beladung durch ein Zuführen von erwärmtem Fluid F vorgesehen. Die Wärmezuführeinrichtung 40 ist im ersten Teilbereich 31 angeordnet. Hierfür ist in dessen unteren Abschnitt A1u ein Rücklauf 51 vorgesehen, der mit einem Wärmetauscher 93 verbunden ist. Durch diesen Wärmetauscher 93 strömendes Fluid F wird erwärmt und strömt in den Speicherbehälter 3. Sofern das Fluid F wärmer ist als Fluid F an der Grenze zwischen dem ersten unteren Abschnitt A1u und dem ersten oberen Abschnitt A1o des ersten Teilbereichs 31, steigt das Fluid F aufgrund seiner geringen Dichte bis in den ersten oberen Abschnitt A1o des ersten Teilbereichs 31 auf. Ist das Fluid F jedoch kühler als Fluid F an der Grenze, stoppt der Auftrieb entweder, oder aber die Bewegungsrichtung des Fluids F wird zunächst in die Horizontale umgelenkt und das Fluid F steigt anschließend innerhalb eines der Unterteilbereiche 321, 322 auf.

Die Entladevorrichtung 60 weist im ersten Teilbereich 31 einen Vorlaufanschluss 50 an der Oberseite des Speicherbehälters 3 auf. Hierdurch kann das wärmste Fluid F des ersten Teilbereichs 31 direkt entnommen werden. Zusätzlich sieht die Entladevorrichtung 60 einen sich im ersten oberen Abschnitt A1o angeordneten und sich über die Unterteilbereiche 321, 322 erstreckenden Wärmetauscher 80 vor. Somit wird der erste Teilbereich 31 direkt entladen und der zweite Teilbereich 32 indirekt.

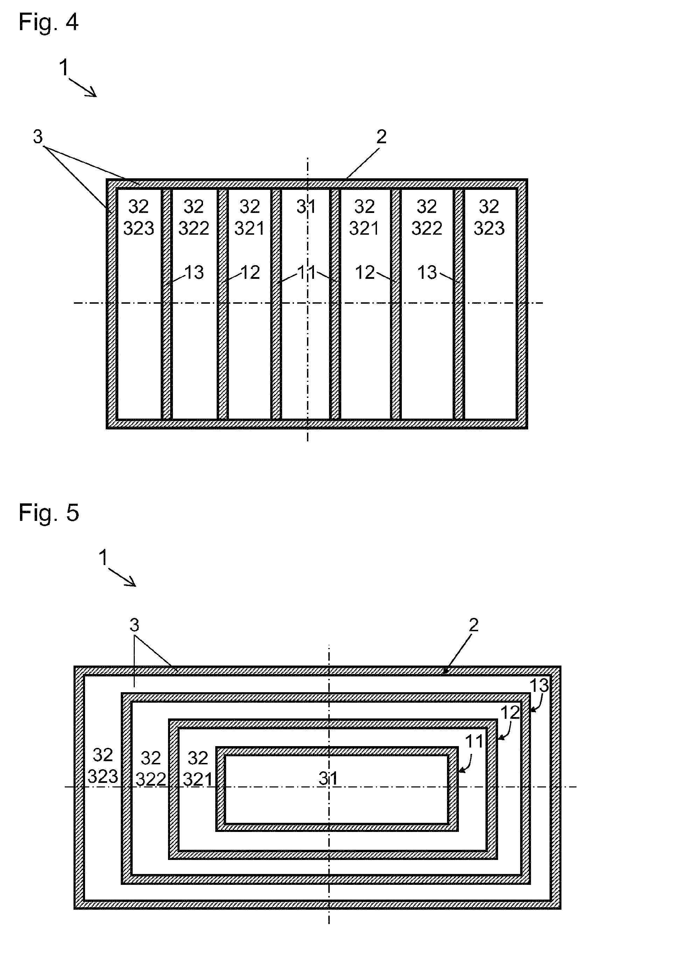

Fig. 4 zeigt einen horizontalen Querschnitt durch einen erfindungsgemäßen Fluidspeicher 1 mit horizontal nebeneinander angeordneten Teil- 31, 32 und Unterteilbereichen 321, 322, 323. Der Fluidspeicher 1 weist einen Speicherbehälter 3 auf. In letzterem sind durch zwei Trennwände 11 ein erster Teilbereich 31 und ein horizontal benachbarter zweiter Teilbereich 32 ausgebildet. Insbesondere ist der erste Teilbereich 31 in der Horizontalen zwischen zwei Trennwänden 11 und zwei Seitenwänden 2 des Speicherbehälters 3 angeordnet. Die Teilbereiche 31, 32 sind in einem oberen Abschnitt durch die Trennwände 11 hydraulisch getrennt und in einem unteren Abschnitt hydraulisch miteinander verbunden.

Im horizontal zu beiden Seiten benachbarten zweiten Teilbereich 32 sind durch weitere Trennwände 12, 13 horizontal benachbarte Unterteilbereiche 321, 322, 323 ausgebildet. Zwei aneinandergrenzende Unterteilbereiche 321, 322, 323 sind jeweils in einem weiteren oberen Abschnitt durch eine der weiteren Trennwände 12, 13 hydraulisch getrennt und in einem weiteren unteren Abschnitt hydraulisch miteinander verbunden.

Fig. 5 beschreibt ebenfalls einen horizontalen Querschnitt durch einen erfindungsgemäßen Fluidspeicher 1, jedoch mit horizontal ineinander angeordneten Teil- 31, 32 und Unterteilbereichen 321, 322, 323. Der Fluidspeicher 1 weist einen Speicherbehälter 3 auf. In letzterem sind durch eine Trennwand 11 ein erster Teilbereich 31 und ein horizontal benachbarter zweiter Teilbereich 32 ausgebildet. Insbesondere hat die Trennwand 11 einen geschlossenen rechteckigen Umfang und der erste Teilbereich 31 ist horizontal innerhalb des zweiten Teilbereichs 32 angeordnet. Die Teilbereiche 31, 32 sind in einem oberen Abschnitt durch die Trennwand 11 hydraulisch getrennt und in einem unteren Abschnitt hydraulisch miteinander verbunden.

Im horizontal umschließenden zweiten Teilbereich 32 sind durch weitere Trennwände 12, 13 horizontal ineinander geschachtelte benachbarte Unterteilbereiche 321, 322, 323 ausgebildet. Zwei aneinandergrenzende Unterteilbereiche 321, 322, 323 sind jeweils in einem weiteren oberen Abschnitt durch eine der weiteren Trennwände 12, 13 hydraulisch getrennt und in einem weiteren unteren Abschnitt hydraulisch miteinander verbunden. Lediglich der am weitesten vom ersten Teilbereich 31 entfernte dritte Unterteilbereich 323 grenzt an eine Seitenwand 2 des Speicherbehälters 3. Vorzugsweise sollte in diesen dritten Unterteilbereich 323 deshalb Fluid F mit geringer Temperatur geladen werden. Statt eines eckigen Umfanges der Trennwände 11, 12, 13 können auch weitere Formen gewählt werden, wobei insbesondere ein kreisförmiger Umfang viele Vorteile bietet. Insbesondere ist bei einem solchen das Volumen im Verhältnis zur Oberfläche sehr hoch, wodurch Wärmeverluste gering sind und wenig Material verbraucht wird. Zudem hat ein kreisförmiger Umfang eine sehr gute Steifigkeit, sodass ein solcher aus weniger Material herstellbar ist.

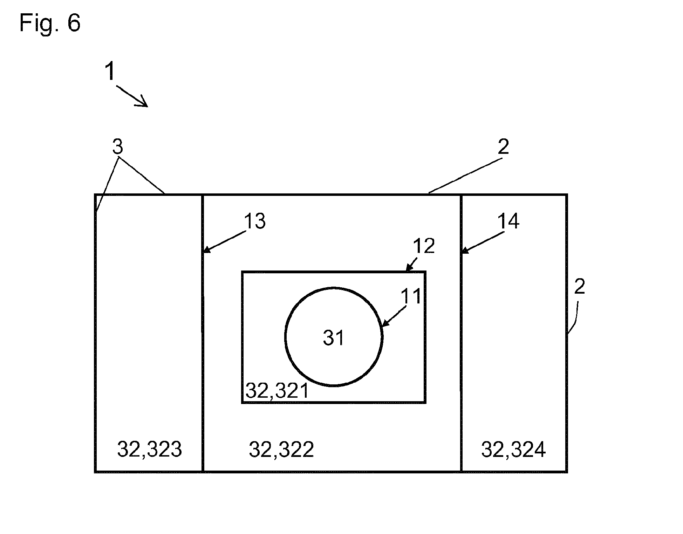

Fig. 6 beschreibt einen Fluidspeicher 1 mit einer Kombination aus unterschiedlich geformten und angeordneten Trennwänden 11, 12, 13, 14. Der Fluidspeicher 1 weist einen rechteckeckigen Speicherbehälter 3 mit einer Seitenwand 2 auf. Eine rechteckige äußere Grundform nutzt einen Stellplatz mit rechtem Winkel sehr gut aus, sodass ein Fluidspeicher 1 mit möglichst großem Volumen an typischerweise vorliegenden Stellplätzen aufstellbar ist.

In diesem Speicherbehälter 3 sind durch eine erste Trennwand 11 mit kreisförmigem geschlossenem Umfang ein erster Teilbereich 31 sowie ein zweiter Teilbereich 32 ausgebildet. Der erste Teilbereich liegt so horizontal innerhalb des Speicherbehälters 3 und innerhalb des zweiten Teilbereichs 32. Sehr warmes Fluid im ersten Teilbereich 31 hat folglich keinen Kontakt zu einer äußeren Seitenwand 2. Wärmeverluste von in diesem befindlichen warmen Fluid sind somit gering.

Der zweite Teilbereich 32 ist durch eine rechteckige geschlossene Trennwand 12, sowie zwei weitere Trennwänden 13, 14 in vier Unterteilbereiche 321, 322, 323, 324 aufgeteilt. Die rechteckige geschlossene Trennwand 12 umfasst die erste kreisrunde Trennwand 11. Der erste Unterteilbereich 321 grenzt dabei ebenfalls nicht an eine äußere Seitenwand 2, wodurch Wärmeverluste auch von in diesem befindlichen warmen Fluid gering sind.

Die verbleibenden Trennwände 13, 14 erstrecken sich jeweils außerhalb der zweiten Trennwand 12 von einer Seitenwand 2 zu einer gegenüberliegenden Seitenwand 2 und bilden so den zweiten, dritten und vierten Unterteilbereich 322, 323, 324 aus. Durch eine derartige Anordnung kann ein relativ kleiner Kernbereich mit dem ersten Teilbereich 31 und dem ersten Unterteilbereich 321 ausgebildet sein, der zuerst geladen wird. Die weiteren Unterteilbereiche 322, 323, 324 weisen große Volumen auf, die geladen werden können wenn überschüssige Ladeenergie verfügbar ist.

### Bezugszeichenliste

- 1: Fluidspeicher
- 2: Seitenwand
- 3: Speicherbehälter

- 11: erste Trennwand
- 12: zweite Trennwand
- 13: dritte Trennwand
- 14: vierte Trennwand

- 21: erste hydraulische Verbindung
- 22: zweite hydraulische Verbindung
- 23: dritte hydraulische Verbindung

- 31: erster Teilbereich
- 32: zweiter Teilbereich
- 321: erster Unterteilbereich
- 322: zweiter Unterteilbereich
- 323: dritter Unterteilbereich
- 324: vierter Unterteilbereich

- 40: Wärmezuführeinrichtung
- 41: Wärmetauscher
- 411: Vorlauf
- 412: Rücklauf

- 50: Vorlauf
- 51: Rücklauf

- 60: Entladevorrichtung
- 61: erster Vorlaufanschluss
- 62: zweiter Vorlaufanschluss
- 63: dritter Vorlaufanschluss

- 71: erster Rücklaufanschluss
- 72: zweiter Rücklaufanschluss

- 80: Wärmetauscher
- 81: Vorlauf
- 82: Rücklauf

- 91: Schichtladeeinrichtung
- 92: horizontale Strömungsbarriere
- 93: Wärmetauscher
- 94: Solarkollektor

- A1o: oberer Abschnitt
- A1u: unterer Abschnitt
- A2o: zweiter oberer Abschnitt
- A2u: zweiter unterer Abschnitt
- A3o: weiterer oberer Abschnitt
- A3u: weiterer unterer Abschnitt

- F: Fluid
- V1: erstes Volumen
- V2: zweites Volumen
- V3: drittes Volumen
- V4: viertes Volumen
- b: Breite
- h: Höhe

## Patentansprüche

1. Fluidspeicher (1) mit einem Speicherbehälter (3), **dadurch gekennzeichnet, dass** in diesem durch wenigstens eine Trennwand (11) ein erster Teilbereich (31) und ein horizontal benachbarter zweiter Teilbereich (32) ausgebildet sind, wobei die Teilbereiche (31, 32) in einem oberen Abschnitt (A1o) durch die Trennwand (11) hydraulisch getrennt und in einem unteren Abschnitt (A1 u) hydraulisch miteinander verbunden sind.

2. Fluidspeicher (1) nach Anspruch 1, **dadurch gekennzeichnet, dass** der erste Teilbereich (31) in der Horizontalen zwischen zwei Trennwänden (11) und wenigstens einer Seitenwand (2) des Speicherbehälters (3) angeordnet ist.

3. Fluidspeicher (1) nach Anspruch 1, **dadurch gekennzeichnet, dass** die Trennwand (11) einen geschlossenen Umfang hat und der erste Teilbereich (31) horizontal innerhalb des zweiten Teilbereichs (32) angeordnet ist.

4. Fluidspeicher (1) nach einem der vorhergehenden Ansprüche, **dadurch gekennzeichnet, dass** im zweiten Teilbereich (32) durch wenigstens eine weitere Trennwand (12, 13, 14) horizontal benachbarte Unterteilbereiche (321, 322, 323, 324) ausgebildet sind, wobei zwei aneinandergrenzende Unterteilbereiche (321, 322, 323, 324) jeweils in einem weiteren oberen Abschnitt (A2o, A3o) durch eine der weiteren Trennwände (12, 13, 14) hydraulisch getrennt und in einem weiteren unteren Abschnitt (A2u, A3u) hydraulisch miteinander verbunden sind.

5. Fluidspeicher (1) nach Anspruch 4, **dadurch gekennzeichnet, dass** die Trennwände (11, 12, 13, 14) derart ausgebildet sind, dass die unteren Abschnitte (A1u, A2u, A3u, A4u) ausgehend vom ersten unteren Abschnitt (A1 u) stufenartig abfallend angeordnet sind.

6. Fluidspeicher (1) nach einem der vorhergehenden Ansprüche, **dadurch gekennzeichnet, dass** wenigstens eine der Trennwände (11, 12, 13, 14) ein schlecht wärmeleitendes Material aufweist, sodass zwei benachbarte obere Abschnitte (A1o, A2o, A3o, A4o) thermisch voneinander isoliert sind.

7. Fluidspeicher (1) nach einem der vorhergehenden Ansprüche, **dadurch gekennzeichnet, dass** in dem Speicherbehälter (3) wenigstens eine horizontale Strömungsbarriere (92) angeordnet ist.

8. Fluidspeicher (1) nach einem der vorhergehenden Ansprüche, **dadurch gekennzeichnet, dass** in dem ersten Teilbereich (31) eine Wärmezuführeinrichtung (40) angeordnet ist.

9. Fluidspeicher (1) nach einem der vorhergehenden Ansprüche, **dadurch gekennzeichnet, dass** in wenigstens einem oberen Abschnitt (A1o, A2o, A3o, A4o) ein Vorlaufanschluss (50) zur Entnahme von warmem Fluid (F) angeordnet ist.

10. Fluidspeicher (1) nach einem der vorhergehenden Ansprüche, **dadurch gekennzeichnet, dass** in wenigstens einem oberen Abschnitt (A1o, A2o, A3o, A4o) ein Wärmetauscher (80) angeordnet ist.
